# EUROPEAN PATENT SPECIFICATION

(11) **EP 1 691 212 B1**
(45) Date of publication and mention of the grant of the patent: **05.11.2008**
(21) Application number: 06101353.8
(22) Date of filing: 07.02.2006
(51) Int. Cl.: G01S 13/56, G08B 13/24

(54) **A microwave-barrier detector filter**
Detektionsvorrichtung durch Mikrowellenschranke
Dispositif de détection par barrière hyperfréquence

(30) Priority: 10.02.2005 IT TO20050073
(43) Date of publication of application: 16.08.2006
(73) Proprietor: SILENTRON S.P.A., 10139 Torino (IT)
(72) Inventor: SILENTRON S.P.A., 10139 Torino (IT)
(74) Representative: Quinterno, Giuseppe

(56) References cited:
- EP-A- 0 367 402
- EP-A- 1 288 879
- FR-A- 2 578 077
- FR-A- 2 611 957
- US-A1- 2001 038 338

## Description

The present invention relates to a microwave-barrier detector device, particularly for detecting and indicating transit through a passageway or access, of the kind defined in the preamble of claim 1.

A microwave barrier detector of this kind is known from EP 1 288 879-A.

An object of the present invention is to provide a microwave-barrier detector device which is reliable in operation, has a simple structure, and is extremely easy to install.

This and other objects are achieved, according to the invention, by a barrier detector device according to claim 1.

According to a further aspect of the invention, the first and second structures have respective electrical storage means suitable for supplying the energy necessary for the operation of all of their respective devices and do not therefore require connections to other sources of supply.

Further characteristics and advantages of the invention will become clear from the following detailed description which is given purely by way of non-limiting example with reference to the appended drawing which is a schematic view of a microwave-barrier detector device according to the invention.

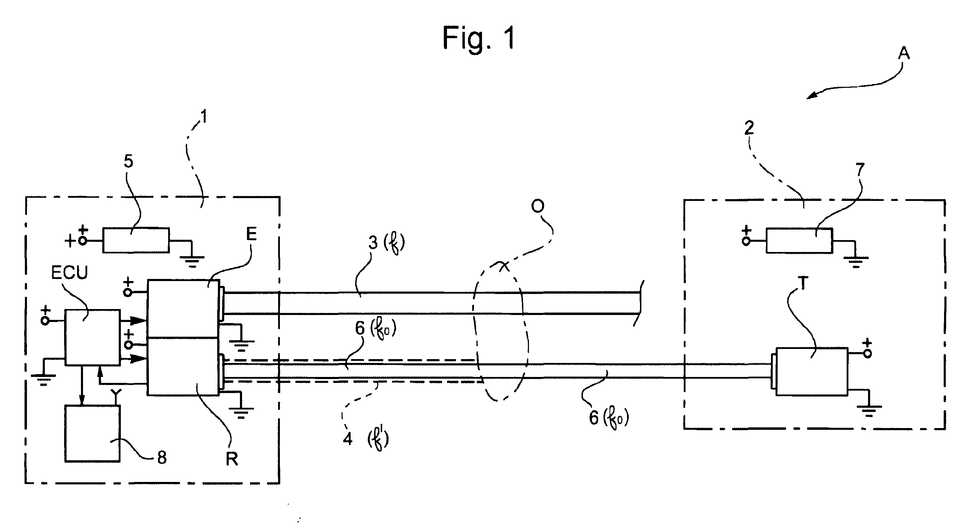

In Figure 1, a microwave-barrier volumetric detector device according to the invention is generally indicated A.

The device comprises a first structure 1 and a second structure 2 which are fixed operatively facing one another and spaced apart.

The structure indicated 1 comprises an emitter E suitable for emitting a beam of microwave radiation 3 of predetermined frequency f, approximately towards the second structure 2.

The first structure further comprises a microwave-radiation receiver R suitable for picking up any radiation 4 reflected by an obstacle O interposed on the path of the beam 3 emitted by the emitter E.

An electronic control and processing unit, generally indicated ECU, is associated with the emitter E and with the receiver R of the first structure 1. As well as controlling the operation of the emitter E and of the receiver R, this unit is arranged in particular for detecting the difference Δf between the frequency f of the radiation 3 emitted by the emitter E and the frequency f' of any reflected radiation 4 picked up by the receiver R. On the basis of the known Doppler effect, the frequency difference Δf is a function of the relative velocity of the obstacle O.

The first structure 1 further comprises at least one battery or cell 5, preferably of the long-life type, which can supply all of the devices included in the structure 1 with the energy necessary for their operation. Since no connection to an electrical supply network is necessary, the structure 1 is in fact a "wireless" device. The possibility of supplying the structure 1 by means of a rechargeable battery which in turn is charged by means of solar cells is provided for.

The second structure 2 comprises a transmitter T suitable for emitting a pulsed beam of microwave radiation 6 towards the receiver R of the first structure 1. The transmitter T is arranged in particular to emit pulses of microwave radiation with a predetermined rate or frequency of repetition f₀.

The pulsed beam 6 is preferably an almost cylindrical beam of limited cross-section.

The second structure 2 is also advantageously provided with at least one battery or cell 7, preferably of the long-life type, suitable for supplying all of the devices of the structure 2 with the energy necessary for their operation, or with a rechargeable battery which in turn is charged by means of solar cells.

In operation, in the absence of obstacles or intrusions between the structure 1 and the structure 2, the emitter E of the structure 1 emits its own microwave beam 3 and the associated receiver R receives the pulsed beam 6 emitted by the transmitter T of the other structure 2.

As soon as an obstacle or an intrusion at least partially intercepts the microwave beam 3 emitted by the emitter E of the structure 1, the associated receiver R receives, in addition to the pulsed beam coming from the transmitter T, also a beam 4 reflected by the obstacle or intrusion O.

The control and processing unit ECU of the structure 1 analyzes the signals generated by the receiver R and, when the reflected radiation 4 picked up by the receiver R has predetermined characteristics indicative of an interception, which may be only partial, of the beam 3 emitted by the emitter E, prevents the operation of the latter. The signals supplied by the receiver R are then correlated solely with the microwave radiation emitted by the transmitter T of the second structure 2.

The unit ECU of the first structure analyzes the signals produced by the receiver R and, if they have predetermined anomalies, activates an alarm-signal generator 8 included in the first structure 1, for example, a radio transmitter which transmits an alarm signal remotely.

The barrier device according to the invention drastically limits inappropriate (false) alarms.

Naturally, the principle of the invention remaining the same, the forms of embodiment and details of construction may be varied widely with respect to those described and illustrated purely by way of non-limiting example, without thereby departing from the scope of the invention as defined in the appended claims.

## Claims

1. A barrier detector device (A) comprising:
- a first structure (1) including:
an emitter (E) of a beam of microwave radiation of predetermined frequency (f),
an associated microwave-radiation receiver (R) suitable for picking up any radiation (4) reflected by an obstacle (0) interposed on the path of the beam (3) emitted by the emitter (E),
control and processing means (ECU) suitable for detecting the difference (Δf) between the frequency (f) of the radiation (3) emitted by the emitter (E) and the frequency (f') of any radiation (4) picked up by the receiver (R), and
alarm-signal generating means (8) controlled by the control and processing means (ECU), and
- a second structure (2) suitable for being fixed facing and spaced from the first structure (1) and comprising:
a transmitter (T) suitable for emitting a microwave radiation,
the control and processing means (ECU) included in the first structure (1) being arranged to activate the emitter (E) and the receiver (R) of the first structure (1) and to analyze the signals generated by the receiver (R);
**characterized in that** the transmitter (T) of the second structure (2) is arranged to emit pulses of microwave radiation at a predetermined rate (f₀) and said control and processing means (ECU) are arranged to prevent the operation of the emitter (E) when the reflected radiation (4) picked up by the receiver (R) has predetermined characteristics indicative of an interception, which may be only partial, of the radiation beam (3) emitted by the emitter (E), and then to analyze the signals generated by the receiver (R) of the first structure (1) in response to the radiation pulses (6) generated by the transmitter (T) of the second structure (2) and to bring about the generation of alarm signals when the signals generated by the receiver (R) have predetermined anomalies.

2. A device according to Claim 1 in which the transmitter (T) of the second structure (2) is arranged to emit an almost cylindrical pulsed beam with a smaller cross-section than that of the beam (3) emitted by the emitter (E) of the first structure (1).

3. A barrier detector device (A) according to Claim 1 or Claim 2 in which the first and second structures (1, 2) have respective electrical storage means (5, 7) suitable for supplying energy to all of their respective devices.

4. A device according to Claim 3 in which the electrical storage means (5, 7) of the structures (1, 2) are of the rechargeable type and are connected to photovoltaic recharging cells.

## Patentansprüche

1. Barrierendetektorvorrichtung (A), umfassend:
- eine erste Struktur (1), Folgendes einschließend:
einen Emitter (E) eines Mikrowellenstrahlenbündels von vorbestimmter Frequenz (f),
einen zugehörigen Mikrowellenstrahlungsempfänger (R), der zum Aufnehmen jeglicher Strahlung (4) geeignet ist, die von einem Hindernis (O), das sich im Pfad des vom Emitter (E) ausgesendeten Strahls (3) befindet, reflektiert wird,
Steuer- und Verarbeitungsmittel (ECU), die zum Ermitteln der Differenz (Δf) zwischen der Frequenz (f) der vom Emitter (E) ausgesendeten Strahlung (3) und der Frequenz (f') irgendeiner vom Empfänger (R) aufgenommenen Strahlung (4) geeignet sind, und
von den Steuer- und Verarbeitungsmitteln (ECU) gesteuerte Alarmsignalerzeugungsmittel (8), und
- eine zweite Struktur (2), die sich dafür eignet, der ersten Struktur (1) zugewandt und von dieser beabstandet fixiert zu werden, und die Folgendes umfasst:
einen Sender (T), der zum Aussenden einer Mikrowellenstrahlung geeignet ist,
wobei die in der ersten Struktur (1) inkludierten Steuer- und Verarbeitungsmittel (ECU) dazu eingerichtet sind, den Emitter (E) und den Empfänger (R) der ersten Struktur (1) zu aktivieren und die vom Empfänger (R) erzeugten Signale zu analysieren;
**dadurch gekennzeichnet, dass** der Sender (T) der zweiten Struktur (2) dazu eingerichtet ist, Mikrowellenstrahlungsimpulse mit einer vorbestimmten Rate (f₀) auszusenden, und die Steuer- und Verarbeitungsmittel (ECU) dazu eingerichtet sind, den Betrieb des Emitters (E) zu verhindern, wenn die vom Empfänger (R) aufgenommene reflektierte Strahlung (4) vorbestimmte Eigenschaften aufweist, die auf ein möglicherweise nur partielles Abfangen des vom Emitter (E) ausgesendeten Strahlenbündels (3) hinweisen, und dann die Signale zu analysieren, die vom Empfänger (R) der ersten Struktur (1) als Reaktion auf die vom Sender (T) der zweiten Struktur (2) erzeugten Strahlungsimpulse (6) erzeugt wurden, und die Erzeugung von Alarmsignalen zu bewirken, wenn die vom Empfänger (R) erzeugten Signale vorbestimmte Anomalien aufweisen.

2. Vorrichtung gemäß Anspruch 1, wobei der Sender (T) der zweiten Struktur (2) dazu eingerichtet ist, einen beinahe zylindrischen gepulsten Strahl mit einem Querschnitt, der kleiner als jener des vom Emitter (E) der ersten Struktur (1) ausgesendeten Strahls (3) ist, auszusenden.

3. Barrierendetektorvorrichtung (A) gemäß Anspruch 1 oder Anspruch 2, wobei die erste und die zweite Struktur (1, 2) jeweils elektrische Speichermittel (5, 7) aufweisen, die zum Zuführen von Energie zu allen ihren jeweiligen Vorrichtungen geeignet sind.

4. Vorrichtung gemäß Anspruch 3, wobei die elektrischen Speichermittel (5, 7) der Strukturen (1, 2) vom wiederaufladbaren Typ sind und mit photovoltaischen Wiederaufladezellen verbunden sind.

## Revendications

1. Dispositif de détection par barrière (A) comprenant :
- une première structure (1) comprenant :
un émetteur (E) d'un faisceau de rayonnement hyperfréquence ayant une fréquence prédéterminée (f),
un récepteur de rayonnement hyperfréquence associé (R) adapté pour collecter un rayonnement (4) réfléchi par un obstacle (O) interposé sur le chemin du faisceau (3) émis par l'émetteur (E),
des moyens de commande et de traitement (ECU) adaptés pour détecter la différence (Δf) entre la fréquence (f) du rayonnement (3) émis par l'émetteur (E) et la fréquence (f') d'un rayonnement (4) collecté par le récepteur (R), et
des moyens de génération de signal d'alarme (8) qui sont gérés par les moyens de commande et de traitement (ECU), et
- une seconde structure (2) adaptée pour être fixée en face de, et pour être espacée par rapport à, la première structure (1), et comprenant :
un dispositif de transmission (T) adapté pour transmettre un rayonnement hyperfréquence,
les moyens de commande et de traitement (ECU) contenus dans la première structure (1) étant configurés de façon à activer l'émetteur (E) et le récepteur (R) de la première structure (1), et pour analyser les signaux produits par le récepteur (R) ;
**caractérisé en ce que** le dispositif de transmission (T) de la seconde structure (2) est configuré de façon à émettre des impulsions de rayonnement hyperfréquence à un débit prédéterminé (f₀), et lesdits moyens de commande et de traitement (ECU) sont configurés de façon à prévenir le fonctionnement de l'émetteur (E) quand le rayonnement réfléchi (4) collecté par le récepteur (R) a des caractéristiques prédéterminées désignant une interception, qui peut être partielle uniquement, du faisceau de rayonnement (3) émis par l'émetteur (E), et de façon à analyser les signaux produits par le récepteur (R) de la première structure (1) en réponse aux impulsions de rayonnement (6) générées par le dispositif de transmission (T) de la seconde structure (2) et à provoquer la génération de signaux d'alarme quand les signaux produits par le récepteur (R) présentent des anomalies prédéterminées.

2. Dispositif selon la revendication 1, dans lequel le dispositif de transmission (T) de la seconde structure (2) est configuré de façon à émettre un faisceau à impulsions sensiblement cylindrique avec une section en coupe plus petite que celle du faisceau (3) émis par l'émetteur (E) de la première structure (1).

3. Dispositif de détection par barrière (A) selon la revendication 1 ou la revendication 2, dans lequel la première et la seconde structures (1, 2) comprennent des moyens de stockage électrique respectifs (5, 7) qui sont adaptés pour fournir de l'énergie à la totalité de leurs dispositifs respectifs.

4. Dispositif selon la revendication 3, dans lequel les moyens de stockage électrique (5, 7) des structures (1, 2) sont du type rechargeable et sont raccordés à des cellules de recharge photovoltaïques.
